# EUROPEAN PATENT SPECIFICATION

(11) **EP 0 708 703 B1**
(45) Date of publication and mention of the grant of the patent: **22.09.1999**
(21) Application number: 95918205.6
(22) Date of filing: 10.05.1995
(51) Int. Cl.: B29C 47/64

(54) **CHAOS SCREW FOR SINGLE SCREW EXTRUDER**
CHAOTISCHE SCHRAUBE FÜR EINSCHNECKENEXTRUDER
VIS DE MELANGE CHAOTIQUE POUR EXTRUDEUSE A VIS UNIQUE

(30) Priority: 10.05.1994 KR 9410204; 09.05.1995 KR 9511276
(43) Date of publication of application: 01.05.1996
(73) Proprietor: POHANG IRON & STEEL CO., LTD., Pohang City, Kyong Sang Book-Do 790-300 (KR); RESEARCH INSTITUTE OF INDUSTRIAL SCIENCE & TECHNOLOGY, Pohang City, Kyong Sang Book-Do 790-330 (KR)
(72) Inventor: KWON, Tai Hun Research Institute of Ind. Science, Kyongsangbook-do 790-330 (KR); KIM, See Jo Research Institute of Ind. Science, Kyongsangbook-do 790-330 (KR)
(74) Representative: Vidon, Patrice
(86) International application number: KR9500053
(87) International publication number: WO9530530

(56) References cited:
- AT-A- 317 523
- FR-A- 2 411 079
- GB-A- 2 137 893

## Description

### Field of the invention

The present invention relates to a screw for a single screw extruder, and particularly to a chaos screw for a single screw extruder, in which the structure is simple, and a superior mixing capability is provided without much modifying the existing structure, thereby realizing improved chaotic mixing characteristics.

### Description of the prior art

In accordance with the developments of new materials such as high molecular materials, composite materials and powder materials for use in various industrial fields, the single screw extruder together with the twin screw extruder is widely used for mixing the materials. The single screw extruder is low in its price compared with the twin screw extruder, while the mixing capability of the former lags behind that of the latter. However, in the industrial fields, the single screw extruder is more widely used than the twin screw extruder for the reason of economy. Therefore, if the insufficiency of the mixing capability which is the disadvantage of the single screw extruder is improved, then there can be developed a single screw extruder which is low in its price and excellent in its mixing capability. Screw extruders of the prior art are disclosed in GB-A-2 137 893 and AT-B-317 523

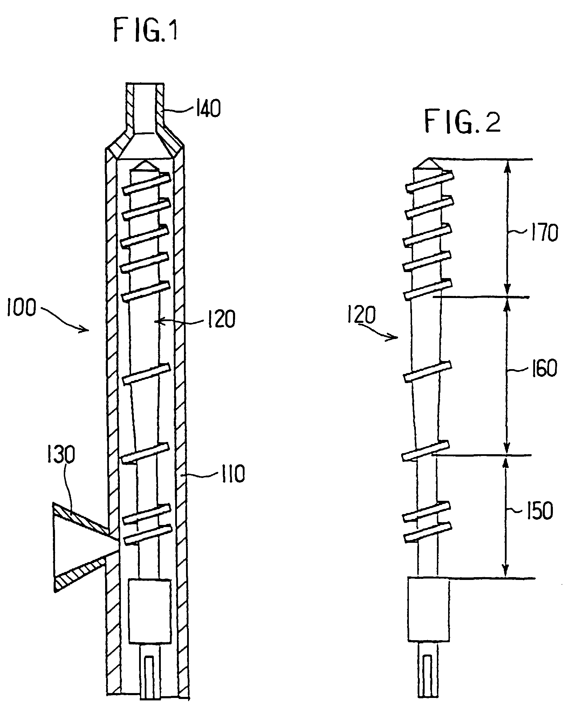

As shown in FIG. 1, a conventional single screw extruder 100 includes: a screw 120 within a barrel 110, a hopper 130 formed on a side near one end of the barrel 110, and an extruding die 140 formed at another end of the barrel 140.

If a pelletized extrusion material is put into the hopper 130, the screw 120 revolves and pushes the pelletized material toward the extruding die 140, thereby discharging the extrusion material. During this process, the pelletized material is melted into a fluid.

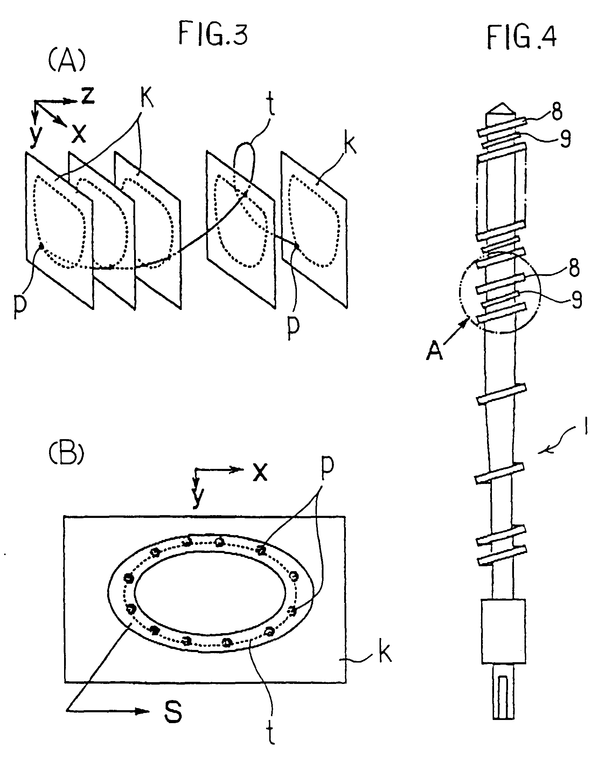

The structure of the screw 120 of the single screw extruder 100 is illustrated in FIG. 2. This screw 120 is generally divided into: a delay melting or solid conveying zone 150, a melting or compression or transition zone 160, and a melt conveying or metering zone 170. Many studies have been made for the geometric contours of the respective zones, and there are many related patents. Most of the mentioned patents are aimed at improving the geometric contours of the solid conveying zone, the transition zone and the melt conveying zone for reducing the energy loss.

Meanwhile, there have been issued many patents which are aimed at facilitating uniform mixing through regular laminar mixing.

According to U.S. Patent 4,178,104, there is provided pins within a barrel, and there are formed grooves so as for the screw to revolve, thereby forming a pin type extruder. There is a more recent U.S. Patent 4,696,575 in which a pin is inserted into the barrel in the same way, but the barrel can be disassembled and assembled, so that the replacement of the pin can be more easily carried out.

Further, there are U.S. Patents 4,425,044, 4,642,138, 4,779,989, 5,141,426 and 5,178,458. In these patents, attempts are made to promote the mixing in a manner other than the "pin type".

According to Korean Patent publication No. 91-5195, an under-cut is formed on the screw, and the cross sectional area of the screw is continuously reduced in the axial direction.

However, in the above described conventional techniques, the geometric contour is very much complicated, and the barrel has to be re-processed together with the screw, as well as being high in the manufacturing cost.

Meanwhile, in designing the screw, the requirement which is no less important than the mixing capability is the screw characteristics. The screw characteristics refer to a throughput as a function of the pressure gradient within the screw and the revolution speed of the screw. However, the complicated contour of the conventional screws aggravates the screw characteristics, while the adjustment of the throughput based on the relation between the die and the revolution speed of the screw becomes difficult. Therefore, optimum design of such screws is quite difficult to achieve due to the complicated geometry.

### Summary of the invention

The present invention is intended to overcome the above described disadvantages of the conventional techniques.

Therefore it is the object of the present invention to provide a chaos screw for a single screw extruder, in which the mixing capability is greatly promoted without much modifying the structure of the existing single screw extruder, thereby providing an improved chaos mixing characteristics.

In achieving the above object, the chaos screw for a single screw extruder according to the present invention includes: a hopper formed on a side near one end of a barrel; an extruding die formed on another side of the barrel; and a screw installed within the barrel to push an extrusion material from the hopper toward the extruding die to discharge the material.

The chaos screw further includes: a plurality of screw flights for moving forward the extrusion material; a plurality of barriers provided between said screw flights; the barriers having a periodic structure with barrier existing zones and barrier non-existing zones periodically repeated; and the barriers being formed on the whole melt conveying region in which the screw flights are formed, whereby a chaotic mixing of the extrusion material is realized.

Further, in the chaos screw of the present invention, the barriers are formed in the same shape as that of the screw flights.

### Brief description of the drawings

The above object and other advantages of the present invention will become more apparent by describing in detail the preferred embodiment of the present invention with reference to the attached drawings in which:
FIG. 1 is a sectional view showing the total constitution of the general single screw extruder;
FIG. 2 illustrates the screw of the conventional technique;
FIG. 3 illustrates a particle trajectory in the melt conveying zone of the conventional screw, in which:
FIG. 3A illustrates the case along the screw channel; and
FIG. 3B is a sectional view of the screw channel;
FIG. 4 illustrates the constitution of the chaos screw according to the present invention;
FIG. 5 illustrates the basic concept of the chaos screw according to the present invention, in which:
FIG. 5A is a plan view showing an unfolding of a region A of FIG. 4 along the channel; and
FIG. 5B is a sectional view taken along a line B-B of FIG. 5A;
FIG. 6 is a detailed illustration of the region A of FIG. 4;
FIG. 7 is a sectional view taken along a line C-C of FIG. 6;
FIG. 8 is a photograph visualizing a particle moving state which is the result of the mixing capability test for the conventional screw;
FIG. 9 is a photograph visualizing a particle moving state which is the result of the mixing capability test for the screw according to the present invention;
FIG. 10 is a particle trajectory showing the mixing capability obtained based on the numeric analysis after carrying out a mixing capability test for the conventional screw; and
FIG. 11 is a particle trajectory showing the mixing capability obtained based on the numeric analysis after carrying out a mixing capability test for the screw according to the present invention.

### Description of the preferred embodiment

A chaos screw 1 according to the present invention is illustrated in FIG. 4. Before describing the chaos screw 1, the chaos mixing concept which is relevant to the present invention will be described together with the general flow state of the conventional screw.

In order to understand the flow state in the melt conveying zone within the extruder, generally the velocity distribution is calculated after converting the spiral channels formed in the axial direction of the extruder into planes. Based on this conversion, the trajectories of the material particles can be obtained, and a typical trajectory of the material particle is illustrated in FIGs. 3A and 3B.

If the trajectory t of the material particle P is observed on FIG. 3A, it is seen that the particles P move in the spiral direction within the 3-dimensional channel K which is formed between the barrel and the screw. The trajectory which is projected on an x-y plane forms a closed stream line which is shown in FIG. 3B.

The present inventor will call the closed stream line a shell S. The material particles P which exist within the shell SW cannot be transferred to another shell. Further, the material particles P which exist within an arbitrary shell S undergo deformations. The degree of mixing through the deformation increases in a linear form in the lengthwise direction of the extruder. This is an evidence to the fact that the mixing within the single screw extruder occurs due to a regular laminar mixing. Thus the fact that the mixing or the deformation linearly increases indicates a limit to the mixing capability of the single screw extruder.

The chaos screw 1 which is illustrated in FIG. 4 has a chaotic mixing characteristics to improve the mixing capability of the single screw extruder.

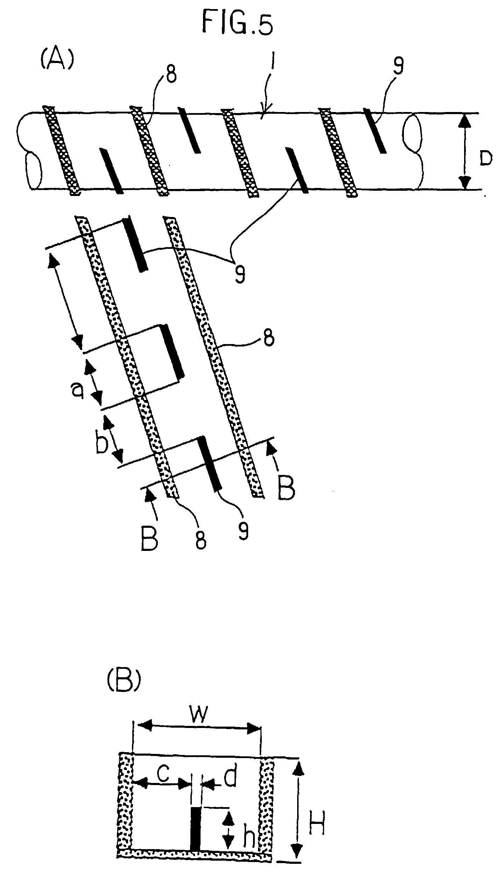

The basic concept of the chaos screw according to the present invention will be described referring to FIGs. 5A and 5B.

FIG. 5A illustrates the channel of the region A of FIG. 4, while FIG. 5B is a sectional view taken along a line B-B of FIG. 5A. So as to disturb the stream line within the screw channel, a plurality of barriers (or breakers) 9 which are shaped like a screw flight 8 are periodically installed, so that the typical flow in a region without barriers can be periodically deformed in a region having barriers, this being the basic principle of the present invention.

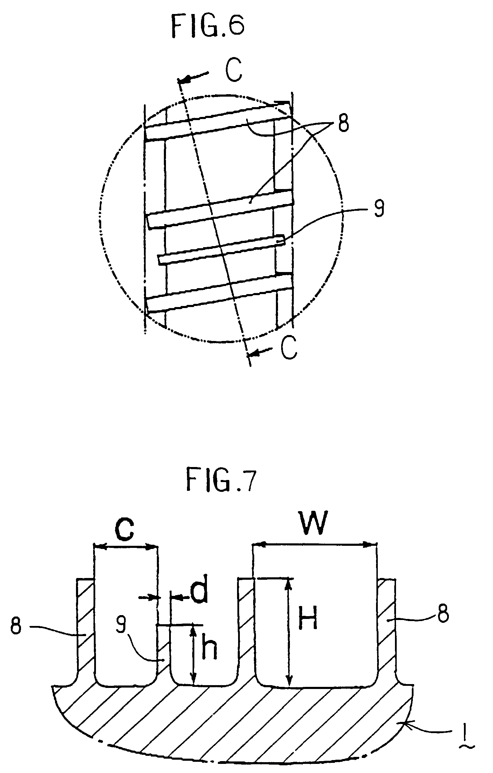

That is, the structure is such that a portion a having a barrier 9 and a portion b having no barrier are periodically repeated (e.g., (a)(b)-(a)(b)-(a)(b)....). When the structure is periodically repeated, the form of (a)(b)-(a)(b)-(a)(b).... is not necessarily required. That is, when (a)(b)-(a)(b)-(a)(b)... are repeated, it includes the case that the dimensions of the repeated (a) and (b) are varied. Further, the gap c between the screw flight 8 and the barrier 9 which is illustrated in FIG. 5B is in principle larger than zero (0) and smaller than the channel width W. This gap (c) is maintained constant over the whole of said melt conveying region in which said screw flights are present. FIG. 6 illustrates in detail in an enlarged scale the region A of FIG. 4 to show the basic concept of the chaos screw. FIG. 7 is a sectional view taken along a line C-C of FIG. 6, and here, c, d, h and H are adjusted to obtain the optimum mixing performance. That is, in FIG. 7, the gap c between the screw flight 8 and the barrier 9 includes all the ranges which are larger than zero and smaller than the channel width. Further, the height h of the barrier 9 includes all the ranges which are larger than zero and smaller than the height H of the screw flight. The gap c and the height h include all the ranges which can be varied within the channel width W and the height H. Further, the thickness d of the barrier 9 is equal to or smaller than the thickness of the screw flight.

In the chaos screw 1 according to the present invention, material particles P which have been existing within a certain shell S can be transferred to another shell, and periodic repetition of such transfers leads to a chaotic mixing.

Further, in the chaos screw which is based on the above described principle, the structure of the flight 8 is not modified, and therefore, the screw characteristics can be maintained. At the same time, as to the formation of the barriers 9, they have the same shape as that of the screw flight 8, and therefore, they can be formed by using a numeric controlled (NC) lathe, so that they can be machined simultaneously, thereby making it possible to save the manufacturing cost.

Now the present invention will be described based on actual examples.

### 〈Example 1〉

A small volume of high molecular material colored with a dye stuff was mixed with a large volume of transparent high molecular material and was put into an extruder, and then an extrusion was carried out. Then a cooled barrel was opened to observe the mixing procedure.

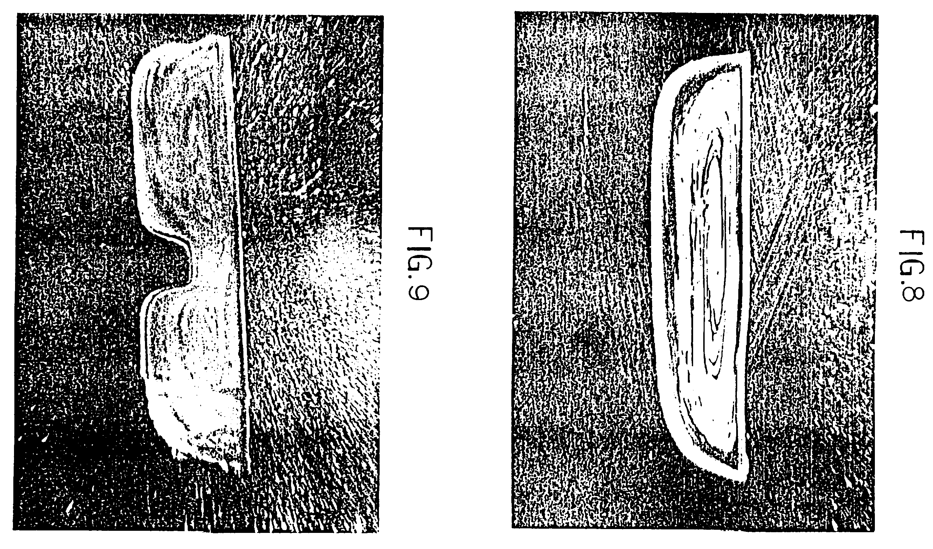

Then if the material which is processed along the channel of the conventional screw is extracted, and if it is sliced, then the deformation state of the colored high molecular material for the respective portions can be easily recognized. The representative result of this test is illustrated in FIG. 8. Meanwhile, the material which was processed along the channel of the chaos screw of the present invention was sliced to test it, and FIG. 9 is a photograph showing the test result. As can be seen in the photographs, the degree of the mixing at the end of the channel is far superior in the chaos screw.

It was confirmed that, in the conventional screw of FIG. 8, the shape of the shell was not varied from the starting portion to the ending portion. This is an evidence to the fact that the mixing within the single screw extruder owes to the regular laminar mixing.

On the other hand, in the case of the chaos screw of FIG. 9, the occurrence of chaotic mixing could be confirmed. In FIG. 8, a transparent high molecular material layer (white color) and a colored high molecular material layer (black color) can be definitely distinguished. However, in FIG. 9, the mixing is uniformly carried out to such a degree that the transparent high molecular material layer (white color) and the colored high molecular material layer (black color) cannot be distinguished. Further, in FIG. 9, the indented portion at the center of the bottom of the screw is that which was formed by the barrier 9.

### 〈Example 2〉

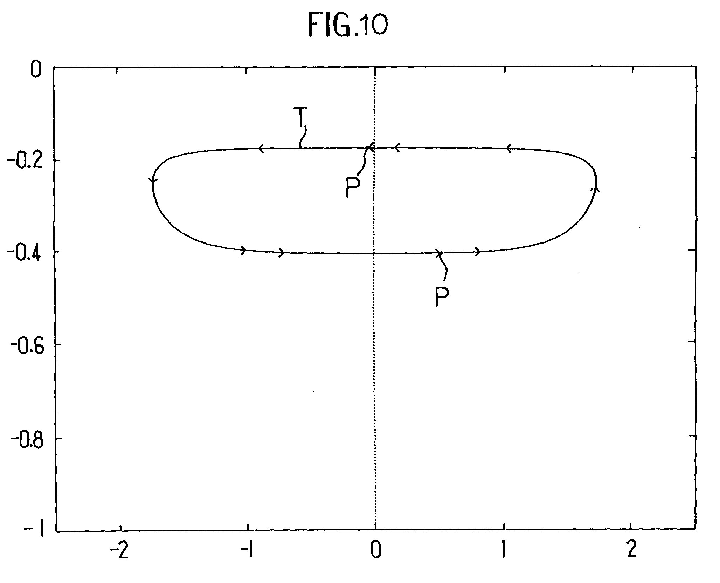

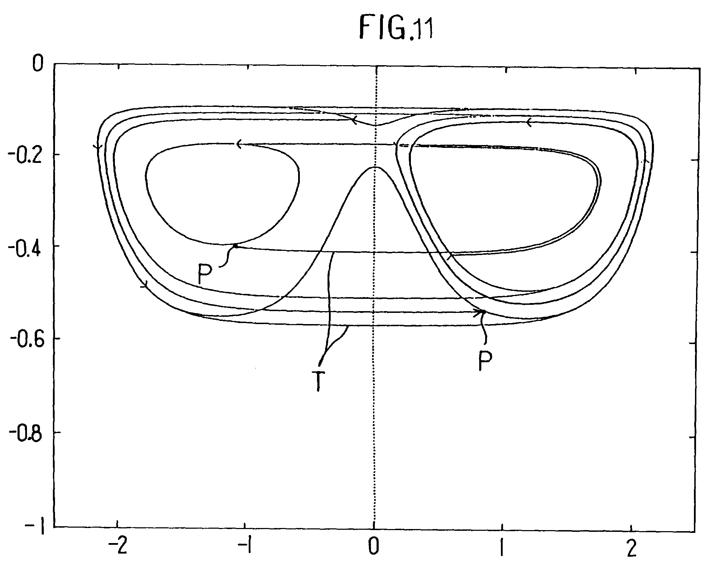

In this example, the chaotic mixing was confirmed through numeric analysis. In order to understand the particle flow in the conventional screw and in the chaos screw of the present invention, a finite element analysis was carried out. Then based on the velocity distribution which was obtained as a result of the numerical analysis, the typical particle trajectories were illustrated in FIGs. 10 and 11.

As shown in FIG. 10, in the conventional screw 120, the particle advancement was realized only within a shell S, so that the particle trajectory T would be maintained in a certain form. On the other hand, in the chaos screw of the present invention, the advancement direction of the particles P was such that the particles drifted through the whole area of the channel, thereby destroying the certain form. Therefore, by tracing the trajectory of the particles P, it could be confirmed that the mixing performance of the chaos screw of the present invention is far superior than the conventional screw.

According to the present invention as described above, periodically repeated barriers 9 having the shape of the flight 8 are installed, so that a chaotic mixing can be achieved. Therefore, a mixing improvement is realized with a simple structure. Owing to the simplicity of the geometric contour, the screw can be machined by a numeric controlled lathe. Further, without modifying the barrel, only the screw is replaced with the chaos screw of the present invention, and therefore, economy is ensured. Further, owing to the fact that the geometric contour is not much different from the conventional screw, the screw characteristics are maintained in a good condition.

## Claims

1. Screw for a single screw extruder for mixing extrusion materials and for discharging them within and from said single screw extruder, comprising : a plurality of screw flights (8) for moving forward said extrusion material ; and a plurality of barriers (9) provided between said screw flights (8) over the whole melt conveying region (170) in which said screw flights (8) are present, said barriers (9) having a height (h) smaller than the height (H) of said screw flight (8),
characterised in that :
said barriers (9) are provided in a form of periodically repeating structure (a) (b)-(a)(b)-(a)(b)... alternately consisting of barrier existing zones (a) and barrier non-existing zones (b) ; and
the gap (c) between said screw flight (8) and said barrier (9) is maintained constant over the whole range of said melt conveying region (170) in which said screw flights (8) are present.

2. The screw as claimed in claim 1, wherein said barrier (9) has a thickness (d) larger than zero (0) and smaller than the thickness of said screw flight (8).

## Patentansprüche

1. Schnecke für eine Einzelschnecken-Strangpresse zum Mischen von Extrudiermaterialien in der Einzelschnecken-Strangpresse und zum Abgeben dieser Materialien aus der Einzelschnecken-Strangpresse, enthaltend: mehrere Schraubengänge (8) zum Vorwärtsbewegen des Extrudiermaterials und mehrere Sperrelemente (9), die zwischen den Schraubengängen (8) über den gesamten Schmelzförderbereich (170) vorgesehen sind, in dem die Schraubengänge (8) vorhanden sind, wobei die Sperrelemente (9) eine Höhe (h) aufweisen, die kleiner als die Höhe (H) der Schraubengänge (8) ist,
**dadurch gekennzeichnet,** daß die Sperrelemente (9) in Form einer sich periodisch wiederholenden Struktur (a)(b)-(a)(b)-(a)(b) ... vorgesehen sind, die abwechselnd aus Zonen (a) mit Sperrelementen und Zonen (b) ohne Sperrelemente besteht, und
daß die Lücke (c) zwischen einem Schraubengang (8) und einem Sperrelement (9) über den gesamten Bereich des Schmelzförderbereiches (170) konstant ist, in dem die Schraubengänge (8) vorhanden sind.

2. Schnecke nach Anspruch 1,
bei der das Sperrelement (9) eine Dicke (d) aufweist, die größer als Null (0) und kleiner als die Dicke des Schraubenganges (8) ist.

## Revendications

1. Vis destinée à une extrudeuse à vis unique pour mélanger des matériaux d'extrusion et pour les évacuer à l'intérieur et depuis ladite extrudeuse à vis unique, comprenant : une pluralité de filets de vis (8) pour faire avancer ledit matériau d'extrusion ; et une pluralité de barrières (9) disposées entre lesdits filets de vis (8) sur l'ensemble de la région d'acheminement de fusion (170) dans lequel lesdits filets de vis (8) sont présents, lesdites barrières (9) ayant une hauteur (h) plus petite que la hauteur (H) dudit filet de vis (8),
caractérisé en ce que :
lesdites barrières (9) sont disposées selon une forme de structure se répétant périodiquement (a)(b)-(a)(b)-(a)(b)... constituée alternativement de zones où il existe des barrières (a) et de zones où il n'existe filet de barrière (b) ; et
l'espace (c) entre lesdits filets de vis (8) et ladite barrière (9) est maintenu constant sur toute la plage de ladite région d'acheminement de fusion (170) dans laquelle lesdits filets de vis (8) sont présents.

2. Vis selon la revendication 1, dans laquelle ladite barrière (9) a une épaisseur (d) plus grande que zéro (0) et plus petite que l'épaisseur dudit filet de vis (8).
